(19) Europäisches Patentamt
European Patent Office
Office européen des brevets

(11) **EP 3 462 695 A1**

(12) **DEMANDE DE BREVET EUROPEEN**

(43) Date de publication:
**03.04.2019 Bulletin 2019/14**

(51) Int Cl.:
*H04L 25/02* (2006.01)   *H04B 1/711* (2011.01)
*H04J 13/00* (2011.01)

(21) Numéro de dépôt: **18197678.8**

(22) Date de dépôt: **28.09.2018**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**KH MA MD TN**

(30) Priorité: **29.09.2017 FR 1759078**

(71) Demandeur: **ALSTOM Transport Technologies
93400 Saint-Ouen (FR)**

(72) Inventeur: **ORION, Jacques
38200 VIENNE (FR)**

(74) Mandataire: **Lavoix
2, place d'Estienne d'Orves
75441 Paris Cedex 09 (FR)**

(54) **MODULE DE DÉTERMINATION DU GAIN ET DU DÉLAI DE GROUPE ASSOCIÉS À UNE FONCTION DE TRANSFERT D'UN CANAL DE TRANSMISSION D'UN SYSTÈME DE COMMUNICATION CDMA**

(57)   L'invention concerne un module (22) de détermination du gain et du délai de groupe associés à une fonction de transfert d'un canal de transmission (16) d'un système (10) de communication CDMA comprenant au moins un émetteur (12) de donnée(s) CDMA et un récepteur (14) de données CDMA, le récepteur (14) de données(s) CDMA comprenant le module (22) de détermination, l'émetteur (12) de donnée(s) CDMA étant propre à transmettre un signal CDMA comprenant au moins un code CDMA d'étalement, représentatif d'un bit de données, le code CDMA d'étalement étant mémorisé, au préalable, par le récepteur (14) de donnée(s) CDMA et comprenant n éléments,
le module (22) de détermination comprenant un outil de comparaison propre à comparer en temps réel et simultanément à la transmission du signal CDMA, la phase et l'amplitude, du spectre du signal ($S_R$) CDMA reçu par le récepteur (14) avec le spectre de signal ($S_A$) CDMA attendu associé au code CDMA d'étalement mémorisé.

FIG.1

EP 3 462 695 A1

**Description**

L'invention a pour domaine celui des systèmes de transmission de données et, plus particulièrement, des systèmes de transmission de données CDMA, c'est-à-dire fondés sur une modulation CDMA, par exemple du courant dans un système de type courant porteur.

Un tel système CDMA est notamment caractérisé par la possibilité d'un débit de transfert de données élevé.

Cependant, et notamment dans le domaine ferroviaire, un tel système CDMA est mis en oeuvre dans un environnement électromagnétique sévère, c'est-à-dire où de nombreuses perturbations sont susceptibles de venir brouiller le signal, ou encore où des distorsions risquent d'être introduites le long du canal de transmission entre l'émetteur et le récepteur du système.

D'une part, les perturbations peuvent être telles que le signal reçu a subi un brouillage (i.e. l'introduction d'un bruit) qui ne permet plus de le reconnaître et d'en extraire les données utiles.

En particulier, dans le domaine ferroviaire de telles perturbations correspondent à des salves électromagnétiques transitoires rapides (de l'anglais « EMC (Electromagnetic compatibility) burst ») très puissantes affectant sensiblement les signaux de données transmis, voire empêchant leur correcte restitution.

D'autre part, la distorsion (i.e. la déformation) introduite par un canal de transmission dont l'impédance n'est pas maitrisée, telle que cela peut être, par exemple, le cas en utilisant des courants porteurs, est caractérisée par une fonction de transfert H(w), où w est la pulsation, qui s'exprime en fonction de la fréquence f selon l'équation:

$$w = 2\,\pi^*f.$$

Elle se caractérise par un module |H(w)|. On préfère souvent parler de gain Gain(w), qui, lorsqu'il est exprimé de manière relative en décibels (dB), est obtenu par la relation: Gain(w) = 20 Log$_{10}$ (|H(w)|). Le gain représente l'atténuation qu'a subie le signal à travers le canal de transmission pour chaque fréquence (ou pulsation) du spectre d'intérêt.

La fonction de transfert H se caractérise également par sa phase P(w), définie par l'équation : P(w) = atan(Im(H(w))/Re(H(w)) où Im est la partie imaginaire du nombre complexe et Re sa partie réelle.

Le paramètre d'intérêt est ici le délai de groupe (« group delay » en anglais) qui représente le retard différentiel subi par chaque fréquence du spectre. Le délai de groupe est défini par l'équation :

$$GD(w) = -\,\delta P(w)/\delta w.$$

Il est connu de déterminer la fonction de transfert H(w) du canal de transmission et de compenser les distorsions introduites en corrigeant le signal reçu au niveau du récepteur.

Il est ainsi connu de déterminer le gain et le délai de groupe de la fonction de transfert en réalisant une succession de mesures sur un échange de réponses impulsionnelles entre l'émetteur et le récepteur.

Cependant, cette technique nécessite un arrêt temporaire de la communication pour l'échange de ces signaux impulsionnels, ce qui réduit d'autant le débit utile du canal de transmission.

L'invention a donc pour but de répondre aux problèmes affectant la détermination des paramètres caractéristiques de la fonction transfert.

Pour cela l'invention a pour objet un module de détermination du gain et du délai de groupe associés à une fonction de transfert d'un canal de transmission d'un système de communication CDMA comprenant au moins un émetteur de donnée(s) CDMA et un récepteur de données CDMA, le récepteur de données(s) CDMA comprenant le module de détermination, l'émetteur de donnée(s) CDMA étant propre à transmettre un signal CDMA comprenant au moins un code CDMA d'étalement, représentatif d'un bit de données, le code CDMA d'étalement étant mémorisé, au préalable, par le récepteur de donnée(s) CDMA et comprenant n éléments,
le module de détermination comprenant un outil de comparaison propre à comparer en temps réel et simultanément à la transmission du signal CDMA, la phase et l'amplitude, du spectre du signal CDMA reçu par le récepteur avec le spectre de signal CDMA attendu associé au code CDMA d'étalement mémorisé.

Suivant des modes particuliers de réalisation le système comporte une ou plusieurs des caractéristiques suivantes, prises isolément ou suivant toutes les combinaisons techniquement possibles :

- le module de détermination comprend un outil d'application d'une transformation de Fourier rapide propre à être connecté à la sortie d'un outil d'échantillonnage du signal reçu délivrant un signal échantillonné, l'outil d'échantillonnage associant, selon sa fréquence d'échantillonnage à chaque code CDMA du signal reçu *v* échantillons, la taille de la transformation de Fourier étant égale à *v;*
- le module de détermination est configuré pour déterminer le gain et le délai de groupe conformément aux relations suivantes :

$$Gain = \left|\frac{FFT_v(S_R)}{FFT_v(S_A)}\right| + C$$

avec C une première constante, et

$$GD = \frac{\Delta\, phase\big(FFT_v(S_R)\big)}{\Delta w} - \frac{\Delta\, phase\big(FFT_v(S_A)\big)}{\Delta w} + D,$$

$$\Delta w = \frac{2\pi f e}{v}$$

avec $\Delta$ un opérateur différentiel de dérivée, w la pulsation de la transformation de Fourier rapide avec où fe est la fréquence d'échantillonnage, et D une deuxième constante ;

- le module de détermination comprend en outre un outil de normalisation du délai de groupe propre à éliminer la constante D du délai de groupe par soustraction de la valeur moyenne des délais de groupe associés aux échantillons pour lesquels le gain est supérieur à une valeur prédéterminée de normalisation ;
- l'outil de normalisation est configuré pour normaliser le délai de groupe selon la relation suivante :

$$GD_n = GD - Moyenne\big(GD(Gain(w) > Gain_{Max} - X\, dB)\big)$$

où X est une constante prédéterminée propre à limiter le traitement mis en oeuvre par l'outil de normalisation à la partie du signal ($S_R$) CDMA reçu où l'énergie est la plus concentrée ;
- pour un multiple *s .v de v* échantillons, avec *s* un entier tel que $1 \le s \le 10$, le module de détermination est configuré pour déterminer le gain et le délai de groupe à partir d'un échantillon *r* avec $1 \le r \le s. v$ présentant un minimum de la variation du délai de groupe pour les *r-v+1* échantillons précédents ;
- le module de détermination est configuré pour déterminer, pour chaque échantillon *r* avec $1 \le r \le s. v$, une variation du délai de groupe égale à la somme des *v* valeurs absolues des écarts de délai de groupe pour les *r-v+1* échantillons précédents ;
- le signal reçu comprend deux codes CDMA d'étalement orthogonaux à la fois, distincts et représentatifs chacun d'un bit de donnée, lesdits codes CDMA d'étalement orthogonaux étant mémorisés, au préalable, par le récepteur de donnée(s) CDMA et comprenant *n* éléments, les deux codes CDMA d'étalement étant configurés pour être transmis simultanément et synchronisés dans un même canal de transmission audit au moins un récepteur et présenter l'un par rapport à l'autre une atténuation d'amplitude inférieure à un seuil prédéterminé ;
- pour chaque échantillon r avec $1 \le r \le s. v$, le module de détermination est configuré pour déterminer, une variation du délai de groupe égale à la somme des *v* valeurs absolues des écarts de délai de groupe pour les *r-v+1* échantillons précédents, en parallèle lorsque :
- les deux codes CDMA d'étalement orthogonaux sont tous deux représentatifs respectivement de deux bits de même valeur, et
- les deux codes CDMA d'étalement orthogonaux sont tous deux représentatifs respectivement de deux bits de valeur différente.

L'invention et ses avantages seront mieux compris à la lecture de la description détaillée qui va suivre d'un mode de réalisation particulier, donné uniquement à titre d'exemple non limitatif, cette description étant faite en se référant aux dessins annexés sur lesquels :

- la figure 1 est une représentation sous forme de blocs du système de communication selon l'invention ;
- la figure 2 est un graphe représentant la structure du signal transmis par l'émetteur de données du système de communication selon l'invention;
- la figure 3 est un graphe illustrant le traitement de signal mis en oeuvre par un module de contrôle de compatibilité électromagnétique du système de communication selon l'invention ;
- la figure 4 est un schéma illustrant quatre possibilités de combinaisons de deux codes CDMA d'étalement orthogonaux transmis simultanément et dans un même canal de transmission ;
- la figure 5 est un graphe illustre le gain et le délai de groupe pour deux échantillons de mesure distincts ;
- la figure 6 est un graphe illustrant l'écart de délai de groupe pour deux codes CDMA d'étalement orthogonaux représentatifs de deux bits de même valeur, et pour deux codes CDMA d'étalement orthogonaux représentatifs de deux bits de valeur différente ;

- la figure 7 est un graphe représentant l'effet de la correction mise en oeuvre par le module de correction selon l'invention.

Dans la suite de la description, l'expression « sensiblement » exprimera une relation d'égalité à plus ou moins 10%.

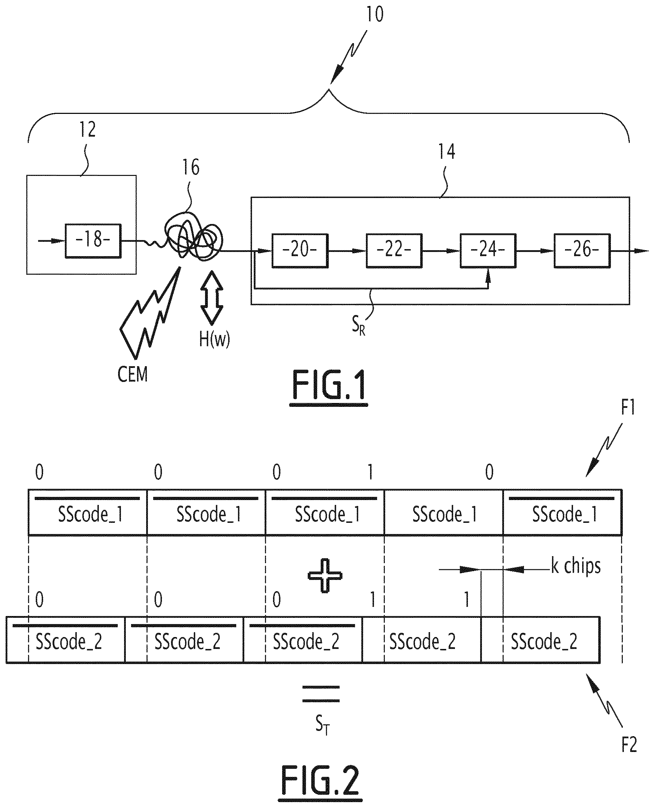

En se référant à la figure 1, le système 10 comporte un émetteur 12 et un récepteur 14 répartis de part et d'autre d'un canal de transmission 16.

L'émetteur 12 comporte au moins un module de codage ou encodeur 18 propre à lire en entrée une donnée à transmettre, par exemple stockée dans une file d'une mémoire de l'émetteur 12, et à la coder avant de l'émettre sur le canal de transmission 12.

La donnée est constituée d'une succession de bits, par exemple, huit bits de données.

L'encodeur code un bit de données au moyen d'un code d'étalement de spectre (SScode de l'anglais « *spread spectrum code* ») par exemple comprenant *n* éléments (de l'anglais « chips »). Autrement dit, l'utilisation d'un SScode revient à remplacer chaque bit par un polynôme de *n* éléments.

Plus précisément, le SScode représentant la valeur haute d'un bit, à savoir un, est constitué de la succession de *n* éléments prédéfinis, par exemple, pour n = 7, le SScode 0001101, et le complément, par exemple 1110010, associé représente la valeur basse d'un bit, à savoir zéro.

Un SScode présente de ce fait la propriété de diviser le débit par *n,* le débit d'élément (en anglais « *chip rate* ») étant n fois plus lent que le débit de donnée (en anglais « *data rate* »). En compensation, un SScode présente une bonne immunité en termes de compatibilité électromagnétique, ce qui est notamment recherché dans le domaine ferroviaire caractérisé par un environnement électromagnétique sévère.

Pour améliorer le débit de donnée, l'émetteur 12 selon l'invention est propre à coder chaque bit de deux flux de données distincts respectivement par au moins deux codes CDMA d'étalement orthogonaux, distincts et représentatifs chacun d'un bit de donnée, et à transmettre ces deux codes d'étalement simultanément dans le même canal de transmission 16 au récepteur 14.

En effet, certains SScodes (i.e. polynômes) sont propres, de par leur valeur, à augmenter le rapport signal à bruit (SNR de l'anglais « Signal-to-noise-Ratio »).

Combiner au moins deux SScodes simultanément permet de bénéficier d'un gain en rapport signal à bruit tout en doublant au moins le débit.

Pour ce faire, une addition arithmétique des éléments (*chips*) de chacun des deux SScodes est mise en oeuvre.

Plus précisément, pour déterminer automatiquement les SScodes orthogonaux propres à augmenter le rapport signal à bruit l'émetteur 12 comprend, optionnellement, un outil de corrélation de codes CDMA d'étalement (i.e. SScode), non représenté, configuré pour corréler un code CDMA d'étalement avec l'ensemble de ses permutations possibles et/ou pour corréler un code CDMA d'étalement avec toutes les permutations possibles d'au moins un autre code CDMA d'étalement.

Un tel outil de corrélation est propre à déterminer pour une taille *n* de SScode la corrélation d'un SScode donné avec toutes ses permutations incluant l'inversion liée à un changement de valeur de bit (de 0 à 1 ou inversement) pour un même SScode, par exemple le SScode 0001101 associé à la valeur 1 suivi de son complément 1110010 associé à la valeur 0.

Plus précisément, par corrélation on entend la somme des produits élément à élément du SScode de taille *n* d'un flux de donnée transmis, comprenant par exemple les n=7 éléments transmis numérotés de 0 à 6 avec les *n* éléments décalés d'un élément suivant, correspondant selon le même exemple aux n=7 éléments transmis numérotés de 1 à 7.

Ainsi, on considère, par exemple, un flux de données codé par un SScode 0001101 associé à la valeur de bit un (et 1110010 lorsqu'il est associé à la valeur de bit zéro) prenant successivement les trois valeurs de bit 1, 1, 0 et donc vingt-et-un éléments *p* (chips) numérotés de zéro à vingt.

En remplaçant les 0 par des -1 pour ne pas avoir un produit nul, la corrélation (p=7 où p est l'élément associé au rang le plus élevé) est conforme à la relation suivante obtenue élément par élément :

$$corrélation\ (p = 7) = \sum(-1, -1, -1, 1, 1, -1, 1) * (-1, -1, 1, 1, -1, 1, -1) = 1 + 1 -$$

$$1 + 1 - 1 - 1 - 1 = -1,$$

De même :

$$corrélation\ (p = 19) = \sum(-1, -1, -1, 1, 1, -1, 1) * (-1, -1, 1, 1, -1, 1, -1) = 1 + 1 - 1 + 1 - 1 - 1 - 1 = -1,$$

A partir de cette corrélation, le rapport signal à bruit associé à un SScode (SNR intra SScode) correspond à l'amplitude la plus élevée de la courbe de corrélation sur le bruit obtenu en fonction de l'élément p considéré.

L'émetteur selon la présente invention utilise optionnellement un outil de sélection pour sélectionner, pour une taille $n$ de SScode, le ou les SScodes dont le rapport signal à bruit intrinsèque est maximal.

Par ailleurs, avantageusement selon un aspect de l'invention, l'émetteur est propre à utiliser, voir à extraire parmi les SScodes obtenus ci-dessus dont le rapport signal à bruit est maximal, le ou les SScode(s) dont la valeur moyenne est nulle (i.e. le ou les SScode(s) comprenant autant d'élément $p$ de valeur 0 que d'élément $p$ de valeur 1 à un près) afin d'éviter de transmettre une composante continue propre à disparaître au cours d'une transmission dans le canal de transmission 16.

Optionnellement, l'outil de sélection est également propre à optimiser le choix du SScode ou des SScodes à utiliser de sorte à maximiser le gain et le rapport signal à bruit associés au(x) SScode(s) tout en minimisant la taille $n$ de SScode(s) utilisée afin de limiter la perte en débit. Le gain en dB associé à chaque SScode est conforme à la relation suivante : Gain (SScode) = $20*\log_{10}(n)$, où n est la taille du SScode. En d'autres termes, l'outil de sélection selon l'invention est propre à déterminer le ou les SScodes associées au meilleur compromis entre gain, rapport signal à bruit et débit.

Selon un autre aspect, l'outil de corrélation est également configuré pour corréler un code CDMA d'étalement (SScode1) avec toutes les permutations possibles d'au moins un autre code CDMA d'étalement (SScode2) afin de déterminer les ensembles (i.e. couple, triplet, etc.) de SScodes qui ne se gênent pas mutuellement lorsqu'ils sont combinés, c'est-à-dire avec un rapport signal à bruit inter SScodes supérieur à un niveau prédéterminé.

Un tel rapport signal à bruit inter SScodes (SNR inter SScodes), est obtenu à partir de la corrélation correspondant à la somme arithmétique, élément par élément (chip par chip), de deux SScodes distincts en considérant la corrélation d'un premier SScode1 avec toutes les permutations de chaque autre deuxième SScode2 possible associé à la même taille n que celle du premier SScode1, les permutations incluant une inversion de la valeur d'un même deuxième SScode2 du fait d'un changement de bit dont le deuxième SScode2 est représentatif.

A partir de cette corrélation, le rapport signal à bruit inter SScodes (SNR inter SScodes) correspondant, par exemple, à l'amplitude du pic de corrélation sur le bruit induit par l'autre SScode, est propre à être déterminé par l'outil de corrélation. Et à partir de ce rapport signal à bruit inter SScodes, l'outil de sélection précédemment cité sélectionne les SScodes à transmettre simultanément de sorte à multiplier le débit associé à l'envoi d'un seul SScode à la fois tout en assurant un gain et un SNR élevé.

Par exemple, des SScodes de taille n=32, à savoir les deux couples de polynômes P1, P2 respectivement associés à chaque SScode1 ou SScode 2 :

le premier couple :

- P1= 00000110111010011100011011010110 (correspondant à la valeur décimale 115984086) et,
- P2= 00001110100010101001011001111011 (correspondant à la valeur décimale 243963515),

ou le deuxième couple :

- P1= 00100001100101101010111010001111 (correspondant à la valeur décimale 563523215) et,
- P2= 01101011011000111001011101100000 (correspondant à la valeur décimale 1801688928).

permettent d'obtenir deux SScodes orthogonaux transmissibles simultanément présentant chacun un SNR inter SScode de l'ordre de 12dB, et donc lorsqu'ils sont combinés au sein d'un même signal transmis dans un même canal un SNR résultant de l'ordre de 11dB sur chacun d'entre eux, et un gain de l'ordre de 30,1 dB, ce qui représente un compromis optimal entre gain, débit et rapport signal à bruit.

Selon un autre mode de réalisation, l'émetteur selon la présente invention est dépourvu d'outil de corrélation et/ou d'outil de sélection et utilise directement l'un des couples de SScode1, SScode2 précédemment cités, ce couple de SScode1 et SScode 2 étant connus tous deux d'au moins un même récepteur.

En relation avec la figure 2, le signal $S_T$ transmis correspond donc à la transmission simultanée dans le même canal de transmission 16 de deux flux de données distincts $F_1$ et $F_2$ dont les bits sont respectivement codés chacun par le SScode1 associé à la valeur de bit 1 (ou son complément $\overline{SScode}1$ associé à la valeur de bit 0) et le SScode2 associé à la valeur de bit 1 (ou son complément $\overline{SScode2}$ associé à la valeur de bit 0). Autrement dit, le signal $S_T$ transmis correspond à l'addition arithmétique élément par élément (chip par chip) des SScode1 et SScode 2 ou de leur compléments selon la valeur de bits codés simultanément.

En variante, une telle addition arithmétique revient à une combinaison linéaire élément par élément (chip par chip) des SScode1 et SScode 2, de sorte que l'amplitude associée au SScode1 et l'amplitude associée au SScode 2 présentent entre elles au maximum une atténuation sensiblement égale à 6dB.

Autrement dit, les amplitudes associées aux deux SScodes 1 et 2 restent comparables entre elles, ce qui correspond à deux localisations des points d'injection dans le canal de transmission 16 des flux de données $F_1$ et $F_2$ respectivement associés au SScode1 et SScode2 espacées d'une distance inférieure à un seuil prédéterminé permettant d'assurer une atténuation au maximum égale à 6dB, par exemple, entre ces deux signaux.

Optionnellement, pour obtenir un rapport signal à bruit optimal, la transmission simultanée de ces deux flux de données distincts $F_1$ et $F_2$ au sein du même canal de transmission 16 est synchronisée. Pour ce faire, l'émetteur 12 comprend un outil de synchronisation non représenté propre à décaler les deux flux de données $F_1$ et $F_2$ d'un élément (chip) de code d'étalement (i.e. SScode).

En effet, le SNR inter SScodes dépend également de la phase entre les deux SScodes, et pour les couples de SScodes précédemment cités le décalage de k=1 chip, i.e. le flux $F_2$ précédent par exemple le flux $F_1$ d'un élément de SScode (chip) permet d'optimiser cette phase entre les polynômes P1 et P2 respectivement associés aux codes SScode1 et SScode2.

En l'absence de cet outil de synchronisation, l'émetteur est propre à fonctionner correctement du fait qu'il est assuré que l'amplitude associée au SScode1 et l'amplitude associée au SScode 2 restent comparables en présentant entre elles au maximum une atténuation, par exemple, sensiblement égale à 6dB.

Le canal de transmission 16 peut-être n'importe quel média. De préférence il s'agit d'une ligne électrique entre l'émetteur et le récepteur et le signal est transmis sous la forme d'un courant portant modulé selon la procédure CDMA. Autrement dit l'émetteur 12 et le récepteur 14 sont respectivement des émetteur/récepteur par courant porteur en ligne.

Le récepteur 14 comporte une chaîne de traitement du signal reçu $S_R$ après passage dans le canal de transmission 16. Une telle chaîne de traitement du signal comprend par exemple, après réception du signal reçu $S_R$, un filtre passe-bas analogique anti-repliement, non représenté, configuré pour filtrer le signal reçu $S_R$ selon le critère de Shannon afin de rejeter les fréquences au-delà de la limite supérieure de la bande passante du signal reçu $S_R$.

Conformément au théorème de Shannon, la fréquence $f_c$ de coupure d'un tel filtre selon l'invention est d'une part propre à atténuer, par exemple d'au moins 20dB, les signaux présentant une fréquence au-delà de la fréquence d'échantillonnage $f_e$ divisée par deux.

Par ailleurs, selon la présente invention, la fréquence $f_c$ de coupure d'un tel filtre est déterminée de sorte à conserver le spectre (i.e. la bande de fréquence) le plus large possible, et pour ce faire, la fréquence $f_c$ est la plus proche possible de fe/2 de sorte à délivrer une réponse impulsionnelle la plus courte possible.

En d'autres termes, selon la présente invention, à fe/2 le filtre utilisé selon la présente invention, est propre à couper le signal à -20 dB de sorte à faciliter l'écrêtage détaillé ci-après.

Puis, la sortie d'un tel filtre passe-bas est propre à être connectée à un convertisseur analogique numérique (ADC) propre à convertir le signal reçu depuis le canal de transmission en un signal numérique. Conformément au théorème de Shannon, il est bien connu qu'un ADC doit fonctionner à une fréquence d'échantillonnage $f_e$ au moins deux fois supérieure à la fréquence caractéristique du signal reçu.

Dans le cas présent, la fréquence caractéristique étant celle définie par la structure du SScode utilisé par l'émetteur 12 et connue du récepteur 14, la fréquence d'échantillonnage $f_e$ de l'ADC selon la présente invention est exactement deux fois supérieure à celle des éléments du SScode de manière à obtenir exactement deux points de mesure par élément. Ainsi l'ADC produit un signal numérique présentant deux points de mesure par élément « chip » du SScode utilisé pour coder un bit de données.

De plus, selon l'invention, la chaîne de traitement du signal reçu $S_R$ du récepteur 14 comprend également à la suite du filtre analogique passe-bas anti-repliement et de l'ADC au moins un ou plusieurs des modules électroniques suivants : un module 20 de contrôle de compatibilité électromagnétique au sein du signal reçu, un module 22 de détermination du gain et du délai de groupe associés à la fonction de transfert H(w) du canal de transmission 16, un module de correction 24 de la fonction de transfert H(w) du canal de transmission 16 et un décodeur de donnée 26.

Ces modules du récepteur 14 sont décrits successivement ci-après.

Le module 20 de contrôle de compatibilité électromagnétique (CEM) est optionnellement intégré au récepteur 14 du système de communication 10 pour renforcer l'immunité du système de communication 10 dans un environnement CEM sévère tel que celui des communications de données dans les transports ferroviaires.

Un tel module 20 de contrôle de compatibilité électromagnétique est propre à être connecté à la sortie de l'ADC et en amont de toute autre outil de filtrage hormis le filtre analogique anti-repliement précédemment cité propre à délivrer la réponse impulsionnelle la plus courte possible afin de ne pas étaler l'effet des salves d'impulsions électromagnétiques transitoires et rapides (ou transitoires rapides en salves de l'anglais « *EMC burst* ») propres à entrainer des distorsions des signaux transmis au sein du canal de transmission 16.

En effet, dans un véhicule ferroviaire les systèmes de communications sont sujets à des salves d'impulsions électromagnétiques transitoires et rapides (de l'anglais « *EMC burst* ») propres à brouiller des signaux transmis au sein d'un canal de transmission.

Parmi ces salves (i.e. « *bursts* »), certaines dites « courtes » présentent notamment une largeur de 50ns, correspondant à une fonction Dirac, ou « Dirac », jusqu'à une fréquence d'échantillonnage $f_e$ de 2/50ns soit 40MHz. Un tel Dirac entrant dans une chaine de filtrage, une transformation de Fourier rapide FFT (de l'anglais « *Fast Fourier Transform* ») ou autre est propre à se traduire par la génération de sa propre réponse impulsionnelle (bruit puissant à spectre étalé et difficile à éliminer).

En d'autres termes, en reprenant l'exemple selon lequel un flux de données est codé par un SScode 0001101 associé à la valeur de bit un (et 1110010 lorsqu'il est associé à la valeur de bit zéro) prenant successivement les trois valeurs de bit 1, 1, 0 et donc vingt-et-un éléments $p$ (chips) numérotés de zéro à vingt.

Le SScode reçu affecté au niveau de l'élément (chip) p numéroté 5 par une telle salve d'impulsion électromagnétiques d'ont l'amplitude est égale à 16 présente par exemple la forme suivante :

0 0 0 1 1 16 1 au lieu de 0 0 0 1 1 01.

En conséquence, le résultat de corrélation tel que décrit précédemment est également affecté : *corrélation* ($p$ = 7) = $\sum$(-1,-1, -1,1,1, -1,1)* (-1,-1, 1, 1, 15 (16 - 1),1,-1) = 1 + 1 - 1 + 1 + 15 - 1 - 1 = 15, au lieu de -1 tel qu'indiqué précédemment.

Le récepteur 14, également pourvu d'un outil de corrélation, non représenté, notamment pour décoder les données, le ou les SScode(s) émis par l'émetteur 12 étant connu(s) du récepteur 14, est alors entravé lors du décodage par de telles salves d'impulsions électromagnétiques. En effet, du fait de ces dernières, la moyenne des pics de corrélation est propre à être faussée entrainant le décodage dans un premier lieu d'un bit erroné, voire, si cela est itéré trop souvent, entrainant un décrochage du récepteur CDMA et la perte des données reçues au moment du décrochage.

Pour y remédier, le module de contrôle de compatibilité électromagnétique 20 selon la présente invention est configuré pour limiter l'amplitude du signal reçu $S_R$ à un niveau d'amplitude, en valeur absolue, déterminé en fonction de la taille $n$ dudit au moins un code CDMA d'étalement (i.e. SScode).

En effet, une salve d'impulsions électromagnétiques ou « burst » n'a pas d'impact sur un SScode tant que son amplitude reste inférieure à la taille $n$ du polynôme associé au SScode.

Plus précisément, le module de contrôle de compatibilité électromagnétique 20 est configuré pour utiliser le niveau d'amplitude, en valeur absolue, résultant de l'application d'une fonction $f$ affine d'écrêtage à la taille $n$ du au moins un code CDMA d'étalement (i.e. SScode) utilisé par l'émetteur 12 et connu du récepteur 14, la fonction $f$ affine étant de la forme : $f(n) = an+b$.

En particulier, le module de contrôle de compatibilité électromagnétique comprend un outil de mesure, non représenté, propre à mesurer, selon au moins une itération, le signal reçu $S_R$ sur une fenêtre temporelle de taille prédéterminée égale à m échantillons.

En particulier, selon la présente invention, la mesure est mise en oeuvre de sorte à n'être impactée par aucun bruit pendant ladite mesure. Pour ce faire, les fenêtres temporelles de mesures utilisées présentent une durée plus courte que la période d'occurrence du bruit, ce qui permet d'obtenir plusieurs mesures non impactées par le bruit. De plus, un filtrage est mis en oeuvre pour supprimer les mesures impactées par le bruit, un tel filtrage étant basé sur la suppression des itérations de mesures présentant les valeurs d'amplitude les plus élevées (par exemple les deux plus élevées), et les moins élevées (par exemple les deux moins élevées) sur lesquelles le bruit est suceptible d'avoir eu un impact.

Par exemple, pour un ou plusieurs SScode(s) utilisés par l'émetteur 12 et connu(s) du récepteur 14 de taille n=32, l'outil de mesure est configuré pour utiliser la taille $m$ de fenêtre temporelle proportionnelle à la taille n du au moins un SScode, par exemple m=4*32*2 =256 échantillons ou le chiffre deux représente la fréquence d'échantillonnage $f_e$ car au moins deux fois supérieure à la fréquence caractéristique du signal reçu $S_R$. Autrement dit, pour une itération de mesure, la taille m=256 de la fenêtre de mesure est égale à quatre fois la taille du SScode échantillonné (comprenant 2*32 échantillons), la fréquence d'échantillonnage $f_e$ (de l'ADC étant, selon l'invention, exactement deux fois supérieure à celle des éléments du SScode de manière à obtenir exactement deux points de mesure par élément.

Plusieurs itérations successives de mesures sont mise en oeuvre tout en limitant leur nombre M de sorte que la fenêtre globale d'analyse (correspondant à la somme des M*m échantillons) reste inférieure à la période de répétition des salves d'impulsions électromagnétiques.

En effet, la répétition du bruit, correspondant à des salves d'impulsions électromagnétiques (i.e. « *bursts* »), dites «courtes», étant, par exemple, de 15KHz correspondant à une durée de 67µs, la fenêtre temporelle globale d'analyse, comprend par exemple $10 \leq M \leq 14$ ou encore M= 12 itérations soit 12*256 échantillons, ce qui correspond, pour une fréquence d'échantillonnage $f_e$ à 54.19MHz, à 56µs (12*256/(54.19*10^6) (i.e. une fenêtre temporelle globale d'analyse plus courte que l'intervalle de répétition des salves d'impulsions électromagnétiques égal à 67µs).

Pour chaque itération de mesure (i.e. tous les m=256 échantillons), l'outil de mesure est propre à déterminer et mémoriser, dans la mémoire du récepteur 14 ou dans une mémoire dédiée, la moyenne Vabs de la valeur absolue des *m* échantillons et la moyenne Vmean de la valeur réelle des *m* échantillons.

A partir de ces valeurs Vabs et Vmean, pour le nombre *M* prédéterminé d'itérations de mesure, l'outil de mesure est en outre propre à déterminer les constantes a et b de la fonction affine d'écrêtage *f(n)= an+b* et à les appliquer à l'itération suivante, a étant proportionnel selon un facteur q à la moyenne Vabs$_{mean}$ des (M-2j) moyennes Vabs de la valeur absolue des m échantillons de chacune des *M* itérations, j correspondant au nombres de plus grandes et de plus petites valeurs extraites avant détermination de la moyenne des *M* moyennes Vabs de la valeur absolue des *m* échantillons de chacune des *M* itérations, *b* étant égal à la moyenne Vmean$_{mean}$ des (M-2j) moyennes Vmean des *m* échantillons de chacune des M itérations, 2j correspondant au nombres de plus grandes et de plus petites valeurs extraites avant détermination de moyenne des M moyennes Vmean des m échantillons de chacune des M itérations.

Par exemple, pour j=2, M= 12 sur les douze dernières mesures, les deux plus grandes valeurs et les deux plus petites valeurs de Vabs et Vmean sont extraites et les moyennes Vabs$_{mean}$ et Vmean$_{mean}$ sont respectivement obtenues à partir des résultats Vabs et Vmean associés aux huit itérations restantes.

Une fois les moyennes Vabs$_{mean}$ et Vmean$_{mean}$ déterminées le module de contrôle de compatibilité électromagnétique selon la présente invention limite l'amplitude du signal reçu au niveau d'amplitude f=an+b=q*n* Vabs$_{mean}$ + Vmean$_{mean}$ avec *0<q≤1* de sorte à limiter l'impact des salves électromagnétiques sur le décodage subséquent. Préférentiellement, $\frac{1}{8} \leq q \leq \frac{1}{2}$ de sorte à assurer une marge confortable pour éviter tout effet indésirable des salves électromagnétiques sur le décodage.

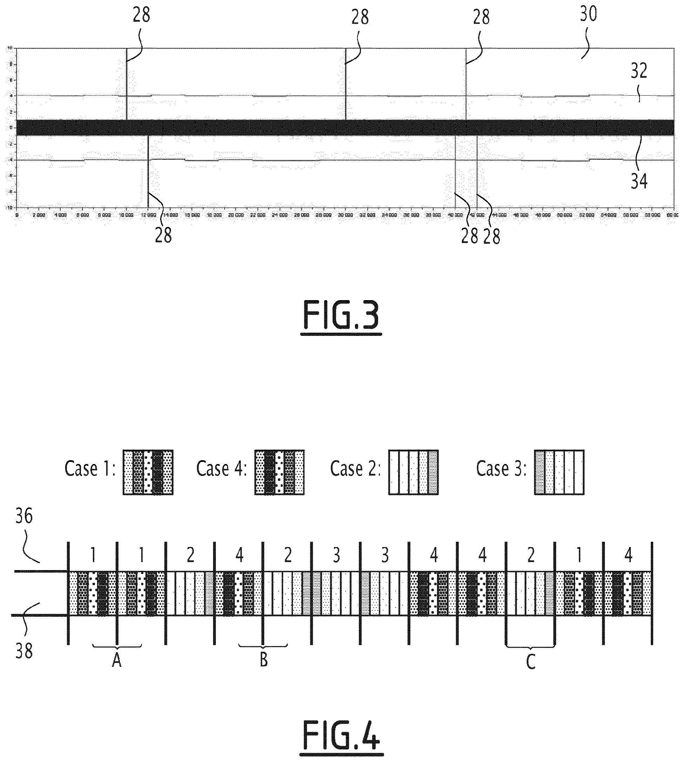

Une telle limitation est illustrée par la figure 3, où les salves électromagnétiques 28 sont écrêtées en valeur absolue, l'amplitude des salves électromagnétiques 28 supérieures à la valeur f étant filtrée et extraite tel que représentée dans la première zone d'écrêtage 30. La zone 32, disjointe de la zone d'écrêtage 30, représente la zone de signal conservé après écrêtage, cette zone 32 comprend la zone de signal utile 34.

Ainsi, le module de contrôle de compatibilité électromagnétique 20 selon la présente invention est propre à saturer l'amplitude des salves électromagnétiques sans altérer le signal utile dans la mesure où, comme indiqué précédemment, le filtrage mis en oeuvre selon la présente invention (y compris le filtre anti-repliement) présente une fréquence f$_c$ de coupure déterminée de sorte à conserver le spectre (i.e. la bande de fréquence) la plus large possible de sorte à délivrer une réponse impulsionnelle la plus courte possible.

Selon le mode de réalisation de la figure 1, la sortie du module optionnel de contrôle de compatibilité électromagnétique 20 est connectée au module 22 de détermination du gain et du délai de groupe associés à la fonction de transfert H(w) selon la présente invention.

Ce module 22 de détermination des caractéristiques de la fonction de transfert H(w) est fondé sur la comparaison, en temps réel, en phase et en amplitude, du spectre d'un SScode attendu S$_A$ correspondant au SScode transmis et connu (i.e. mémorisé) du récepteur 14 avec celui d'un SScode effectivement reçu S$_R$ et donc affecté par la fonction de transfert H(w) du canal de transmission 16.

Autrement dit, le module 22 de détermination comprend un outil de comparaison propre à comparer en temps réel et simultanément à la transmission du signal CDMA, la phase et l'amplitude du SScode attendu S$_A$ correspondant au SScode transmis et connu (i.e. mémorisé) du récepteur 14 avec celui du SScode effectivement reçu S$_R$.

Ainsi, contrairement à l'état de la technique, aucune interruption de la transmission CDMA (i.e. la communication entre émetteur et récepteur en cours de mise en oeuvre) n'est nécessaire en réception pour déterminer le gain et le délai de groupe associés à la fonction de transfert H(w).

Le module de détermination 22 des caractéristiques de la fonction de transfert H(w) comprend un outil d'application d'une transformation de Fourier (transformation de Fourier discrète), non représenté. Plus précisément, l'outil applique une transformation de Fourier rapide sur le signal numérique, provenant soit directement de l'outil d'échantillonnage soit du module optionnel de contrôle de compatibilité électromagnétique 20, pour obtenir en sortie un signal transformé.

Pour cette transformation, l'outil sélectionne dans le signal numérique un mot qui dans le présent mode de réalisation présente une longueur de *v*=64 échantillons successifs (i.e. le nombre *v* d'échantillons égal le produit de la fréquence d'échantillonnage f$_e$ par la taille n=32 de SScode(s) utilisé à l'émission). Ainsi la longueur d'un mot correspond à la longueur sur laquelle est échantillonné le SScode utilisé.

La transformation de Fourier rapide de taille *v* est donc appliquée sur un mot sélectionné entre les instants d'échantillonnage *r* et *r*+63 où *r* correspond au premier échantillon du SScode échantillonné, qui comprend 64 échantillons.

Par la suite, r=1 correspond au premier bit du SScode attendu S$_A$.

Le module de détermination de gain et de délai de groupe 22 est configuré pour déterminer le gain et le délai de groupe en utilisant le résultat d'une telle transformation de Fourier conformément aux relations suivantes :

$$Gain = \left| \frac{FFT_v(S_R)}{FFT_v(S_A)} \right| + C \qquad (1),$$

avec C une première constante, et

$$GD = \frac{\Delta\,phase\big(FFT_v(S_R)\big)}{\Delta w} - \frac{\Delta\,phase\big(FFT_v(S_A)\big)}{\Delta w} + D, \qquad (2),$$

avec $\Delta$ un opérateur différentiel de dérivée (les valeurs étant discrètes cela revient à un écart entre deux valeurs), $w$ la pulsation de la transformation de Fourier rapide avec $\Delta w = \frac{2\pi f e}{v}$ où fe est la fréquence d'échantillonnage, et D une deuxième constante.

Plus précisément, C représente la perte moyenne en gain du signal dans le canal de transmission 16.

La constante D correspond à la somme du retard moyen du canal $D_{mc}$ et du retard $D_p$ lié à la position de prélèvement de $S_R$ par rapport à $S_A$

La constante D n'est pas quantifiable en temps réel dans la mesure où le retard moyen du canal $D_{mc}$ et le retard $D_p$ lié à la position de prélèvement de $S_R$ par rapport à $S_A$ sont inconnus.

Pour y remédier, le module de détermination comprend alors un outil de normalisation du délai de groupe, non représenté, la normalisation du délai de groupe étant propre à être mise en oeuvre par soustraction de la valeur moyenne des délais de groupe associés aux échantillons pour lesquels le gain est supérieur à une valeur prédéterminée de normalisation, par exemple, conformément à la relation suivante :

$$GD_n = GD - Moyenne\big(GD(Gain(w) > Gain_{Max} - X\,dB)\big)$$

où X est une constante prédéterminée propre à limiter le traitement mis en oeuvre par l'outil de normalisation sur la partie du signal $(S_R)$ CDMA reçu où l'énergie est la plus concentrée.

Par exemple, X= 12 dB, ce qui représente un quart du maximum en amplitude du signal reçu $S_R$ est en effet admissible qu'un bruit qui commence à gêner un signal ne gênera pas un signal quatre fois plus fort.

En d'autres termes, pour faire en sorte de normaliser le délai de groupe dont la valeur absolue importe peu puisque seules les variations de cette grandeur sont recherchées, on soustrait la moyenne du délai de groupe correspondant aux fréquences dont le gain est important afin d'éviter de normaliser avec du bruit de fond. Le but est ici de conserver les zones du spectre à fort gain pour éviter une pollution par le bruit dans les zones du spectre à faible gain.

La transformation de Fourier rapide d'un mot débutant pris au hasard dans le signal numérique ne correspond pas toujours au spectre du ou des SScode(s) utilisé(s).

En effet, l'utilisation d'une transformation de Fourier rapide sans filtre de fenêtrage revient à obtenir le spectre du mot sélectionné et indéfiniment répété dans le temps.

Il est à noter qu'il est préférable de ne pas mettre en oeuvre un filtre de fenêtrage du fait que selon la présente invention la taille de la transformation de Fourier rapide est égale à la taille de SScode échantillonné. En effet, dans ce cas précis où la taille de la transformation de Fourier rapide est égale à la taille de SScode échantillonné la mise en oeuvre d'un filtre de fenêtrage dégraderait la sensibilité du traitement opéré, un tel filtrage ayant tendance à altérer les parties de début et de fin du mot sélectionné.

Si l'on considère la transmission d'un seul flux codé par un SScode, le spectre du mot sélectionné correspond au spectre du SScode reçu uniquement lorsque :

- r = 1, 65, 129, etc., c'est-à-dire que le début du mot sélectionné correspond en effet au début du code. La sélection du mot est alors synchronisée avec le SScode et son spectre correspond à celui du SScode.
- deux bits de donnée successifs ont la même valeur. Le SScode est alors répété sur 128 échantillons, et le mot sélectionné entre r et r+63, avec r entre 2 et 64, correspond à la fin du SScode du premier bit et au début du SScode du second bit. Le mot sélectionné est donc une simple permutation circulaire du SScode. Par conséquent le spectre normalisé du mot sélectionné est égal à celui du SScode.

Par la suite, les termes « spectre » et « délai de groupe » utilisés correspondent respectivement au spectre normalisé et au délai de groupe normalisé.

Lorsque, selon l'aspect particulier de l'invention selon lequel l'émetteur CDMA transmet simultanément dans un même canal deux SScodes orthogonaux, SScode1 et SScode2, associés respectivement à deux flux de données distincts, quatre cas sont à envisager tels que listés dans le tableau suivant :

|  | Cas 1 | Cas 2 | Cas 3 | Cas 4 |
|---|---|---|---|---|
| Data_$F_1$ | 0 | 0 | 1 | 1 |
| Data_$F_2$ | 0 | 1 | 0 | 1 |
| Signal_$F_1$ | $\overline{SScode}\_1$ | $\overline{SScode}\_1$ | $SScode\_1$ | $SScode\_1$ |
| Signal_$F_2$ | $\overline{SScode}\_2$ | $SScode\_2$ | $\overline{SScode}\_2$ | $SScode\_2$ |
| $S_{Transmis}$ | $\overline{SScode}\_1 + \overline{SScode}\_2$ | $\overline{SScode}\_1 + SScode\_2$ | $SScode_1 + \overline{SScode}\_2$ | $SScode_1 + SScode\_2$ |

Ces quatre cas sont illustrés par la figure 4 où le numéro des cas est reporté dans la ligne 36 et le signal correspondant en ligne 38.

Trois exemples de prélèvements A, B, C par FFT du signal reçu $S_R$, sont également représentés sur la figure 4.

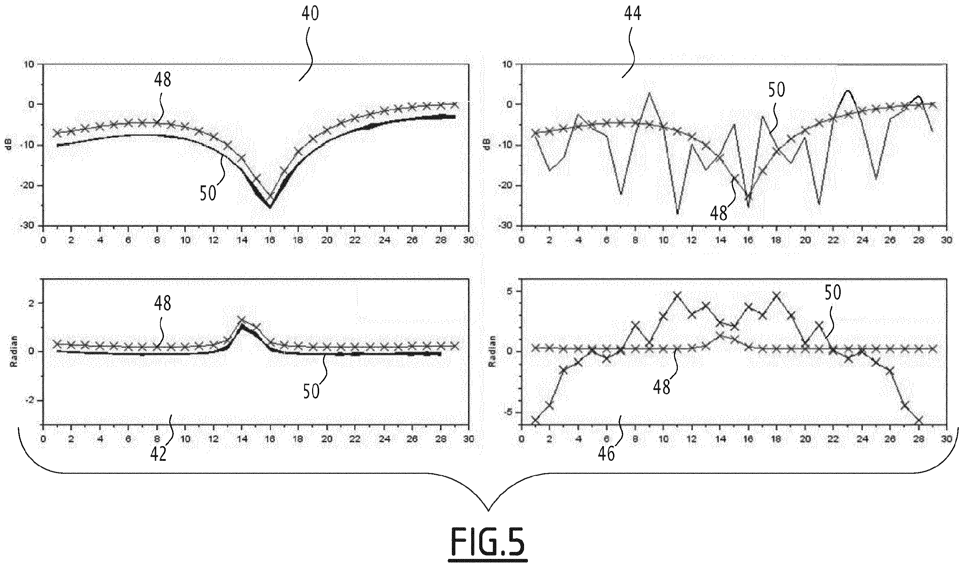

La figure 5 représente le gain sur le diagramme 40 et de délai de groupe normalisé sur le diagramme 42 obtenus pour des positions d'application de FFT correspondant aux prélèvements des cas A ou C correspondant à des positions pertinentes (i.e. des bons moments) d'application de la FFT.

A l'inverse, la figure 5 représente le gain sur le diagramme 44 et le délai de groupe normalisé sur le diagramme 46 obtenus pour une position d'application de FFT correspondant au prélèvement du cas B correspondant à une position non pertinente (i.e. un mauvais moment) d'application de la FFT.

Lorsque le prélèvement FFT est effectué au bon moment tels que représentés sur les diagrammes 40 et 42, le gain et le délai de groupe attendus 48 sont respectivement sensiblement égaux aux gain et délai de groupe mesurés 50. A l'inverse, pour un prélèvement effectué au mauvais moment, tels qu'illustrés par les diagrammes 44 et 50 le gain et le délai de groupe attendus 48 sont respectivement sensiblement décorrélés des gain et délai de groupe mesurés 50 (i.e. un écart substantiel entre la mesure et la valeur attendu est obtenu).

En d'autres termes, pour le mode de réalisation où deux SScode(s) sont transmis ensemble, c'est-à-dire simultanément, au sein d'un même canal de transmission 16, la seule manière d'obtenir le spectre attendu est de le prélever au bon moment, c'est-à-dire soit au sein d'une des permutations de bits successifs identiques, soit exactement en phase avec l'un des quatre cas précédemment listés.

Il s'agit donc de ne retenir que les mots sélectionnés qui correspondent au(x) SScode(s) utilisé(s) pour générer le signal reçu ($S_R$) ou à une permutation des éléments les constituant.

Pour ce faire, selon la présente invention, la variable d'écart de délai de groupe EGD est définie par : $EGD(r) = \sum_v |\Delta GD(r)|$.

En effet, à la différence de la variation de gain qui n'est pas finie, la variation de phase est bornée entre $-\pi$ et $\pi$, et ce pour les n, par exemple n=32, fréquences de mesure comprises entre 0 et fe/2, ce qui revient à une valeur de phase en valeur absolue maximale de $32\pi$, et de ce fait propre à être comparée à une valeur seuil prédéterminée, par exemple de trente radians, permettant de discriminer les résultats, correspondant seulement à du bruit, supérieurs à ce seuil.

GD(r) est le délai de groupe calculé à partir d'un mot sélectionné à partir de l'échantillon r, où $\Delta$ est l'opérateur différentiel de dérivée (les valeurs étant discrètes cela revient à un écart entre deux valeurs), et la somme est réalisée sur *r-v+1* échantillons précédents, est introduite.

Plus précisément, le module de détermination est configuré pour déterminer, pour chaque échantillon *r* avec $1 \le r \le s$. *v, s* étant un entier tel que $1 \le s \le 10$, une variation du délai de groupe égale à la somme des *v* valeurs absolues des écarts de délai de groupe pour les *r-v+1* échantillons précédents.

Lorsque le mot (i.e. le prélèvement de *v* éléments numériques par application de la FFT) est sélectionné au bon moment tel qu'illustré par le diagramme 42, l'écart de délai de groupe est minimum, la valeur de délai de groupe mesuré 50 variant peu d'un échantillon r à un autre. Au contraire, lorsque le mot est sélectionné au mauvais moment tel qu'illustré par le diagramme 46, l'écart de délai de groupe est maximal, la valeur de délai de groupe mesuré 50 variant d'un échantillon r à un autre plus que lorsque le mot est sélectionné au bon moment.

De plus, pour le mode de réalisation où deux SScode(s) sont transmis simultanément au sein d'un même canal de transmission 16, le module de détermination 22 est configuré pour déterminer, une variation du délai de groupe égale à la somme des *v* valeurs absolues des écarts de délai de groupe pour les *r-v+1* échantillons précédents, en parallèle lorsque :

- les deux codes CDMA d'étalement orthogonaux sont tous deux représentatifs respectivement de deux bits de même valeur, correspondant aux cas 1 et 4 précédemment cités, et
- les deux codes CDMA d'étalement orthogonaux sont tous deux représentatifs respectivement de deux bits de valeur différente correspondant, aux cas 2 et 3 précédemment cités.

Autrement dit, pour le mode de réalisation où deux SScode(s) sont transmis simultanément au sein d'un même canal de transmission 16, le module 22 de détermination du gain et du délai de groupe comprend donc, d'une part, un outil de calcul du gain, non représenté, et d'autre part en parallèle deux branches de calcul, non représentées, respectivement associées aux cas 1 et 4 d'une part et aux cas 2 et 3 d'autre part, chaque branche comprenant un outil de calcul du délai de groupe associé à un outil de calcul de l'écart de délai de groupe.

De plus, le module 22 de détermination du gain et du délai de groupe comprend un outil d'identification d'échantillon(s) r pour lequel ou lesquels l'écart de délai de groupe passe par un minimum local.

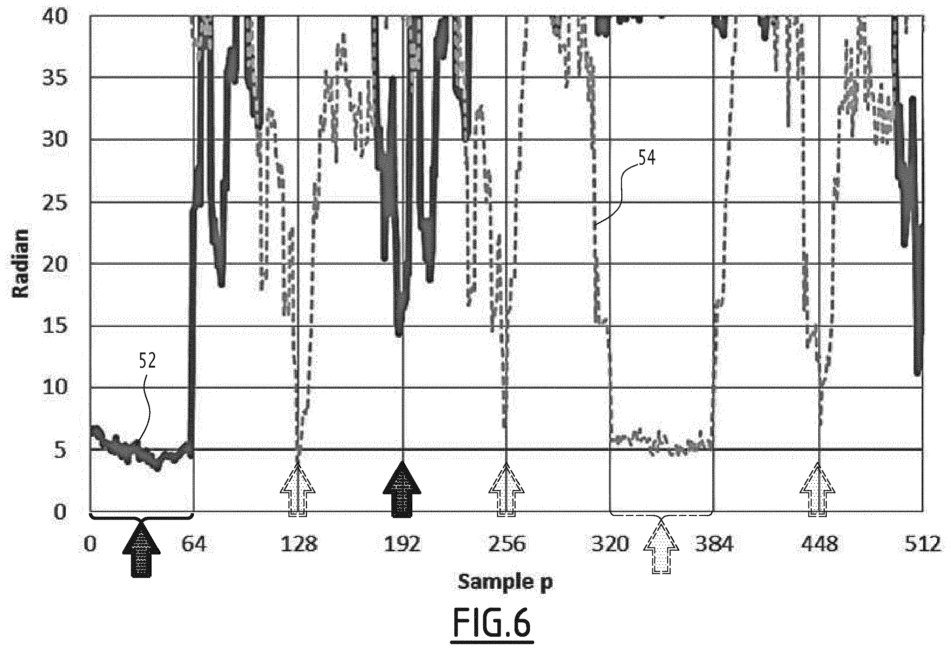

La figure 6, illustre, pour cinq cents échantillons successifs (pour une longueur de SScode n=32, cinq cent douze échantillons correspondant à la transmission de huit bits de données successifs), en trait plein la variation 52 de délai de groupe EGD associée aux cas 1 et 4, et en tirets la variation 54 de délai de groupe EGD associée aux cas 2 et 3.

Ainsi, parmi les calculs de gain et de délai de groupe conformes aux équations (1) et (2) effectués pour chaque échantillon, seuls les résultats correspondant aux échantillons pointés par des flèches sur la figure 6, pour lesquels un minimum de la variation de délai de groupe est obtenu sont retenus, à savoir pour les échantillons $r = 0$ à $r=64$ (correspondant à deux cas 1 ou 4 consécutifs identiques tel qu'illustré par le prélèvement A de la figure 4), $r= 128$, $r= 192$, $r=256$ (pour ces trois échantillons r=128, r= 192, r=256 le prélèvement est en phase (i.e. synchronisé) avec le signal reçu $S_R$), $r=320$ à $r=384$ (correspondant à deux cas 2 ou 3 consécutifs identiques), $r = 448$ (le prélèvement est en phase (i.e. synchronisé) avec le signal reçu $S_R$).

Comme indiqué précédemment, selon un aspect de l'invention, un seuil de détection est introduit, par exemple de trente radians, ou encore une règle de seuillage prédéterminée, pour discriminer un minimum qui correspondrait à du bruit.

Une telle discrimination n'est pas gênante, dans la mesure où pour un système de type courant porteur la déformation du signal est statique ou propre à varier rarement dans le cas par exemple d'une modification de câblage, d'un changement d'impédance liée à la mise sous tension d'un équipement, etc., si bien que la discrimination d'une mesure est acceptable.

Ainsi en sortie du module 22 de détermination du gain et du délai de groupe, on obtient le gain du canal et le délai de groupe normalisé du canal, en d'autres termes les caractéristiques de la fonction de transfert H(w) du canal.

Ces caractéristiques sont ensuite utilisées par le module de correction 24 pour corriger le signal reçu numérisé et éliminer les distorsions introduites le long du canal de transmission. En effet, comme indiqué précédemment, à partir du gain Gain(w) et du délai de groupe GD(w) il est possible de déterminer respectivement le module |H(w)| et la phase P(w) de la fonction de transfert H(w), ces grandeurs étant liées par les relations suivantes :

$$Gain(w) = 20 \, Log_{10} \, (|H(w)|)$$

$$GD(w) = -\, \delta P(w)/\delta w$$

De manière connue, on utilise classiquement selon l'état de la technique un filtre pour corriger le signal numérique reçu, à savoir à la fois le gain et le délai de groupe.

Cependant, l'utilisation d'un tel filtre de l'état de la technique permet certes de corriger le délai de groupe (ce qui est très important pour une démodulation CDMA), mais elle aura tendance à diminuer le rapport signal à bruit, puisqu'elle a tendance à amplifier davantage les zones du spectre où le gain est faible et, par conséquent, de relever le niveau du bruit dans ces zones.

Selon l'invention, le module de correction 24 est propre à appliquer, au signal reçu $S_R$ par le récepteur, non pas un tel filtre de l'état de la technique, mais une fonction de correction correspondant à la fonction complexe conjuguée H*(w) de la fonction de transfert H(w).

Ainsi, le module de correction 24 comprend un outil de calcul de la fonction de transfert conjuguée H*(w) à partir des paramètres caractéristiques de la fonction de transfert H(w).

Selon un aspect particulier de l'invention, le module de correction 24 comprend un filtre à réponse impulsionnelle $FIR_G$, associé à la fonction complexe conjuguée H*(w), dont les $v$ coefficients sont déterminés à partir des coefficients du filtre à réponse impulsionnelle $FIR_H$ associé à (i.e. modélisant) la fonction de transfert H(w) du canal de transmission.

$$FIR_H(0:v-1) = R\acute{e}el(IFFT(H(w)) = R\acute{e}el\left(\sum_{r=0}^{v-1}\left(H(w) \times e^{\frac{iwr}{v}}\right)\right),$$

Plus précisément, avec $v$ la taille de la transformation de Fourier inverse rapide (IFFT de l'anglais « Inverse Fast Fourier Transform » (la transformation de Fourier rapide inverse étant nécessairement de taille identique v à la transformation de Fourier rapide). Il s'agit d'un filtre non symétrique, qui, à la différence d'un filtre à réponse impulsionnelle symétrique, est associé à un délai de groupe.

En particulier, le module de correction 24 comprend un outil d'ordonnancement des coefficients du filtre à réponse impulsionnelle, associé à la fonction complexe conjuguée selon l'ordre inverse des coefficients du filtre à réponse impulsionnelle associé à la fonction de transfert du canal de transmission.

Ainsi, si l'on considère $e_0$, $e_1$, $e_2$, ..., $e_{v-2}$, $e_{v-1}$ les coefficients filtre à réponse impulsionnelle $FIR_H$ associé à la fonction de transfert H(w) ordonnés tel que :

$FIR_H=[e_0, e_1, e_2, ..., e_{v-2}, e_{v-1}]$, alors l'outil d'ordonnancement selon l'invention est propre à ordonner ces coefficients $e_0$, $e_1$, $e_2$, ..., $e_{v-2}$, $e_{v-1}$ dans le sens inverse pour le filtre à réponse impulsionnelle $FIR_G$, associé à la fonction complexe conjuguée H*(w) tel que : $FIR_G=[e_{n-1}, e_{n-2}, ..., e_2, e_1, e_0]$.

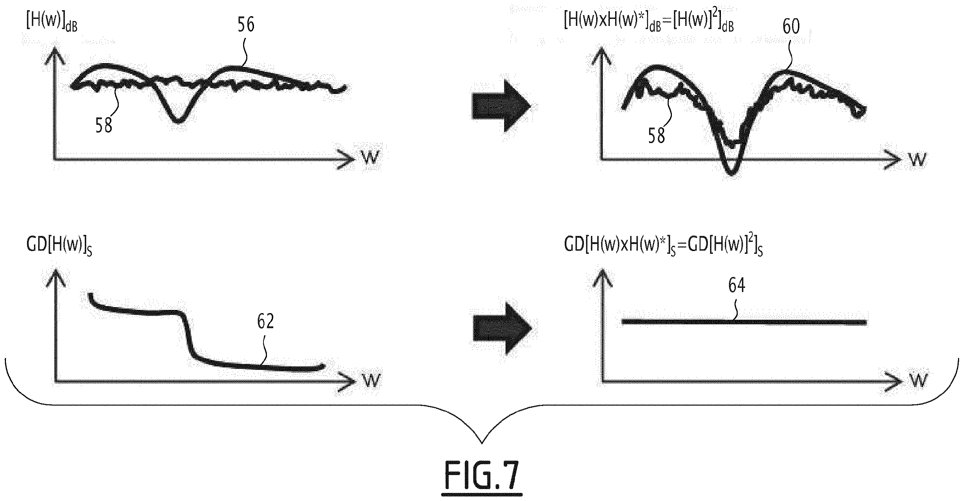

La figure 7 illustre l'effet de la correction mise en oeuvre par le module de correction selon l'invention. En effet, l'utilisation de la correction selon la présente invention permet à la fois de :

- corriger le gain 56 du signal reçu $S_R$ en augmentant le rapport signal à bruit 58 pour délivrer le gain corrigé 60, et
- corriger le délai de groupe 62 du signal reçu $S_R$ en un délai de groupe corrigé 64.

Le signal numérisé reçu $S_R$ est appliqué en entrée de ce filtre qui délivre en sortie un signal numérisé corrigé, pouvant ensuite être fourni au module de décodage 26 de manière à en extraire les données utiles.

L'homme du métier comprendra que de nombreuses variantes/combinaison des traitements de signal présentés ci-dessus sont envisageables.

L'invention concerne également un procédé de communication mis en oeuvre par le système de communication précédemment décrit, le procédé de communication comprenant au moins l'une des étapes suivantes associées respectivement au codeur CDMA 18 de l'émetteur 12 et/ou au module de contrôle de compatibilité électromagnétique 20, et/ou au module de détermination du gain et du délai de groupe associés à la fonction de transfert du canal de transmission 16, et/ou au module de correction de la fonction de transfert 24 du récepteur 14, à savoir :

- le codage de chaque bit d'au moins deux flux de données distincts respectivement par au moins deux codes CDMA d'étalement orthogonaux, distincts et représentatifs chacun d'un bit de donnée, lesdits codes CDMA d'étalement orthogonaux étant connus tous deux d'au moins un même récepteur, et comprenant chacun $n$ éléments, les deux codes CDMA d'étalement étant configurés pour être transmis simultanément dans un même canal de transmission audit au moins un récepteur, et/ou
- la limitation, de l'amplitude du signal CDMA reçu $S_R$, à un niveau d'amplitude, en valeur absolue, déterminé en fonction de la taille n desdits au moins deux codes CDMA d'étalement, et/ou
- la détermination du gain et du délai de groupe associés à la fonction de transfert du canal de transmission 16 par comparaison en temps réel et simultanément à la transmission du signal CDMA, en phase et en amplitude, du spectre du signal $S_R$ CDMA reçu par le récepteur avec le spectre de signal $S_A$ CDMA attendu associé aux deux codes CDMA d'étalement orthogonaux, et/ou
- la correction de la fonction de transfert du canal de transmission du système de communication CDMA, par application, au signal reçu $S_R$ une fonction de correction correspondant à la fonction complexe conjuguée de la fonction de transfert.

L'homme du métier comprendra que le procédé est propre à être enrichi des étapes particulières associées à chaque outil intégré dans les modules de l'émetteur 12 ou du récepteur 14.

Ainsi, grâce à l'invention il est possible que le débit de communication des données ne soit pas affecté par un environnement CEM sévère propre à brouiller le signal, ainsi que par un canal de transmission dont la distorsion est telle que le signal ne serait plus reconnaissable sans la mise en oeuvre de l'invention.

Pour ce faire, l'émetteur 12 superposant l'usage de deux SScodes distincts au sein d'un même canal permet de doubler le débit, le module de contrôle de compatibilité électromagnétique 20 du récepteur 14 permet de lutter efficacement contre des « bursts » CEM, le module 22 de détermination du gain et du délai de groupe associés à la fonction de transfert du canal comme le module de correction 24 fournissent un traitement dynamique (i.e. en temps réel sans interruption de transmission) respectivement de détection et de correction des caractéristiques de la fonction de transfert du canal.

L'homme du métier comprend donc que le système de communication selon l'invention est plus robuste en termes d'immunité CEM et plus performant.

**Revendications**

1. Module (22) de détermination du gain et du délai de groupe associés à une fonction de transfert d'un canal de transmission (16) d'un système (10) de communication CDMA comprenant au moins un émetteur (12) de donnée(s) CDMA et un récepteur (14) de données CDMA, le récepteur (14) de données(s) CDMA comprenant le module (22) de détermination, l'émetteur (12) de donnée(s) CDMA étant propre à transmettre un signal CDMA comprenant au moins un code CDMA d'étalement, représentatif d'un bit de données, le code CDMA d'étalement étant mémorisé, au préalable, par le récepteur (14) de donnée(s) CDMA et comprenant n éléments,
le module (22) de détermination comprenant un outil de comparaison propre à comparer en temps réel et simultanément à la transmission du signal CDMA, la phase et l'amplitude, du spectre du signal ($S_R$) CDMA reçu par le récepteur (14) avec le spectre d'un signal ($S_A$) CDMA attendu associé au code CDMA d'étalement mémorisé.

2. Module de détermination selon la revendication 1, dans lequel le module (22) de détermination comprend un outil d'application d'une transformation de Fourier rapide propre à être connecté à la sortie d'un outil d'échantillonnage du signal reçu délivrant un signal échantillonné, l'outil d'échantillonnage associant, selon sa fréquence d'échantillonnage (fe) à chaque code CDMA du signal reçu ($S_R$) v échantillons, la taille de la transformation de Fourier étant égale à v.

3. Module (22) de détermination selon la revendication 2, dans lequel le module de détermination est configuré pour déterminer le gain et le délai de groupe conformément aux relations suivantes :

$$Gain = \left| \frac{FFT_v(S_R)}{FFT_v(S_A)} \right| + C$$

avec C une première constante, et

$$GD = \frac{\Delta\, phase\big(FFT_v(S_R)\big)}{\Delta w} - \frac{\Delta\, phase\big(FFT_v(S_A)\big)}{\Delta w} + D,$$

avec $\Delta$ un opérateur différentiel de dérivée, w la pulsation de la transformation de Fourier rapide avec $\Delta w = \frac{2\pi fe}{v}$ où fe est la fréquence d'échantillonnage, et D une deuxième constante.

4. Module (22) de détermination selon la revendication 3, dans lequel le module de détermination comprend en outre un outil de normalisation du délai de groupe (GD) propre à éliminer la constante D du délai de groupe par soustraction de la valeur moyenne des délais de groupe associés aux échantillons pour lesquels le gain est supérieur à une valeur prédéterminée de normalisation.

5. Module (22) de détermination selon la revendication 4, dans lequel l'outil de normalisation est configuré pour normaliser le délai de groupe selon la relation suivante :

$$GD_n = GD - Moyenne\big(GD(Gain(w) > Gain_{Max} - X\, dB)\big)$$

où X est une constante prédéterminée propre à limiter le traitement mis en oeuvre par l'outil de normalisation à la partie du signal ($S_R$) CDMA reçu où l'énergie est la plus concentrée.

6. Module (22) de détermination selon l'une quelconque des revendications 2 à 5, dans lequel, pour un multiple *s .v de v* échantillons, avec *s* un entier tel que $1 \leq s \leq 10$, le module de détermination est configuré pour déterminer le gain et le délai de groupe à partir d'un échantillon r avec $1 \leq r \leq s. v$ présentant un minimum de la variation du délai de groupe pour les *r-v+1* échantillons précédents.

**7.** Module (22) de détermination selon la revendication 6, dans lequel le module de détermination est configuré pour déterminer, pour chaque échantillon r avec $1 \leq r \leq s. v,$ une variation du délai de groupe égale à la somme des *v* valeurs absolues des écarts de délai de groupe pour les *r-v+1* échantillons précédents.

**8.** Module (22) de détermination selon l'une quelconque des revendications précédentes, dans lequel le signal reçu ($S_R$) comprend deux codes CDMA d'étalement orthogonaux à la fois, distincts et représentatifs chacun d'un bit de donnée, lesdits codes CDMA d'étalement orthogonaux étant mémorisés, au préalable, par le récepteur de donnée(s) CDMA et comprenant *n* éléments, les deux codes CDMA d'étalement étant configurés pour être transmis simultanément et synchronisés dans un même canal de transmission audit au moins un récepteur (14) et présenter l'un par rapport à l'autre une atténuation d'amplitude inférieure à un seuil prédéterminé.

**9.** Module (22) de détermination selon les revendications 7 et 8, dans lequel, pour chaque échantillon r avec $1 \leq r \leq s. v,$ le module (22) de détermination est configuré pour déterminer, une variation du délai de groupe (EGD) égale à la somme des *v* valeurs absolues des écarts de délai de groupe pour les *r-v+1* échantillons précédents, en parallèle lorsque :

- les deux codes CDMA d'étalement orthogonaux sont tous deux représentatifs respectivement de deux bits de même valeur, et
- les deux codes CDMA d'étalement orthogonaux sont tous deux représentatifs respectivement de deux bits de valeur différente.

FIG.1

FIG.2

## FIG.3

Case 1:    Case 4:    Case 2:    Case 3:

## FIG.4

FIG.5

FIG.6

$[H(w)]_{dB}$

56

58

w

$[H(w) \times H(w)^*]_{dB} = [H(w)]^2]_{dB}$

60

58

w

$GD[H(w)]_S$

62

w

$GD[H(w) \times H(w)^*]_S = GD[H(w)]^2]_S$

64

w

FIG.7

EP 3 462 695 A1

Europäisches
Patentamt

European
Patent Office

Office européen
des brevets

**RAPPORT DE RECHERCHE EUROPEENNE**

Numéro de la demande

EP 18 19 7678

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | EP 0 980 149 A2 (IND TECH RES INST [TW]) 16 février 2000 (2000-02-16) * alinéa [0004] * * alinéa [0010] * * alinéa [0014]; figures 1a, 1b * * alinéa [0016]; figure 2a * * alinéa [0019] * ----- | 1-9 | INV. H04L25/02 H04B1/711 H04J13/00 |
| A | WU J ET AL: "BLIND CHANNEL ESTIMATION BASED ON SUBSPACE FOR MULTICARRIER CDMA", CONNECTING THE MOBILE WORLD : PROCEEDINGS / IEEE VTS 53RD VEHICULAR TECHNOLOGY CONFERENCE, SPRING, 2001; [IEEE VEHICULAR TECHNOLGY CONFERENCE], IEEE SERVICE CENTER, USA, vol. CONF. 53, 6 mai 2001 (2001-05-06), pages 2374-2378, XP001076183, ISBN: 978-0-7803-6728-9 * 1. Introduction * ----- | 1-9 | |

DOMAINES TECHNIQUES RECHERCHES (IPC)

H04L
H04B
H04J

Le présent rapport a été établi pour toutes les revendications

| Lieu de la recherche | Date d'achèvement de la recherche | Examinateur |
|---|---|---|
| Munich | 22 janvier 2019 | Bossen, Michael |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
........................................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 18 19 7678

22-01-2019

| Document brevet cité au rapport de recherche | | Date de publication | Membre(s) de la famille de brevet(s) | | Date de publication |
|---|---|---|---|---|---|
| EP 0980149 | A2 | 16-02-2000 | DE | 69921248 T2 | 27-10-2005 |
| | | | EP | 0980149 A2 | 16-02-2000 |
| | | | TW | 419912 B | 21-01-2001 |
| | | | US | 6154443 A | 28-11-2000 |

EPO FORM P0460